# EUROPEAN PATENT APPLICATION

(11) **EP 1 492 040 A1**
(43) Date of publication of application: **29.12.2004**
(21) Application number: 03715571.0
(22) Date of filing: 28.03.2003
(51) Int. Cl.: G06F 17/60

(54) **CONTENT REPRODUCTION APPARATUS AND CONTENT REPRODUCTION CONTROL METHOD**

(30) Priority: 29.03.2002 JP 2002097846
(71) Applicant: MATSUSHITA ELECTRIC INDUSTRIAL CO., LTD., Kadoma-shi, Osaka 571-8501 (JP)
(72) Inventor: TAKAHASHI, Eiji, Yokohama-shi, Kanagawa 222-0033 (JP); FURUYAMA, Junko, Setagaya-ku, Tokyo 154-0017 (JP); MINEMURA, Atsushi, Itabashi-ku, Tokyo 173-0031 (JP); SUGIURA, Masataka, Setagaya-ku, Tokyo 158-0082 (JP)
(74) Representative: Grünecker, Kinkeldey, Stockmair & Schwanhäusser Anwaltssozietät
(86) International application number: PCT/JP2003/003930
(87) International publication number: WO 2003/083746

(57) **Abstract**

A content replay apparatus which enables secure and extensible content use control in general-purpose terminals. In this apparatus, at license processing application (20), license data processing section (202) performs update of license data, creation of use authorization information, and storage of the updated license into data memory area (102) with the intermediation of license receiving and providing section (201) . Signature section (203) creates a use authorization certificate by affixing a signature made by using signature function (104) of secure device (10) to the use authorization information. Sending section (204) sends an encrypted content decrypting key with the use authorization certificate attached thereto to receiving section (301) of decoder I/F library (30). At decoder I/F library (30), determination section (302) renders determination on the authenticity of the signature and on the authenticity of the use authorization information by using dynamic information contained in the use authorization information.

## Description

### FIELD OF THE INVENTION

The present invention relates to a content replay apparatus and content replay control method.

### BACKGROUND ART

These days, as the Internet comes into widespread use, new modes of businesses are emerging on market such as marketing of content or licenses to PC users via the Internet, or marketing of them to cellular phone users via cellular phone network, and such new businesses are indicating the trend of further increase in their numbers in future. Distributed content is replayed on PCs, cellular phones, or application-dedicated replay terminals, and so forth.

Content means data in which characters, audio, video, maps, and so on are made into an electronic form, or a game or a software, etc., or a combination thereof. Replay of content means, for example, showing of characters or visual images on a display or outputting of sounds from a speaker.

A license means information for giving an authorization for replay, distribution, or storage of content for protection of a copyright on content, and such information may include condition of use and a content decrypting key. Condition of use means information for controlling replay of content, for example, information for limiting the number of times of content replay or for limiting content replay period or for limiting the accumulated time of replay thereof. A content decrypting key means a key for decrypting encrypted content, used in a case where content is in an encrypted form for distribution and storage.

According to any conventional content distribution system, encrypted content and a license which contains a content decrypting key encryptedwith a unique key for a user is distributed by a server to a terminal, and the distributed content and license are stored in the memory medium of the terminal. Additionally, a terminal has conventionally performed processing for authentication of a license on content, updating of the license, and decrypting of a content decrypting key to decode and replay the content. Moreover, to attain secure use control on content as in authentication and updating of a license and the like, a terminal has conventionally been provided with a secure LSI or a tamper-resistant module and so forth. Moreover, in many conventional cases, a terminal used for replay of content is dedicatedly provided for each content distribution system.

By the way, nowadays, there is a growing demand for secure and extensible control on content use which could be offered by general-purpose handheld terminals such as cellular phones and other handsets (PDAs) and so forth.

At the time of content replay, authentication and update of a license is done by an application (a license processing application) which performs license-related processing for content. Then, content data is sent to a decoder, and the content is decrypted there. For example, supposing that the content data is an AAC-format music data, the content data is decrypted using anAAC decoder, and the decrypted sound is outputted from a speaker connected to the decoder.

Herein, there is a method in which decryption of content and authentication of a license is done outside a decoder, and content data in a plaintext format is provided to the decoder for replay. However, in such a method, there is a possibility of eavesdropping at the time of providing the plaintext content data to the decoder. Therefore, for prevention of such an act of eavesdropping, another method carries out authentication of a license outside a decoder, and provides encrypted content data and a content decrypting key which is in a plaintext format to the decoder for decryption and replay of the content inside the decoder. However, even in such a method, there is a possibility of eavesdropping at the time of providing the plaintext content decrypting key to the decoder. Accordingly, for prevention of such an act of eavesdropping, still another method carries out authentication of a license outside a decoder, and provides encrypted content data and a content decrypting key encrypted with a public key of the decoder to the decoder, where the encrypted content decrypting key is decrypted with a private key of the decoder held inside the decoder, and the encrypted content data is decrypted with the decrypted content decrypting key to be replayed therein. However, still even in such a method, there is a possibility that an act of so-called impersonation of a license processing application is conducted, which occurs when the content decrypting key encrypted with the public key of the decoder is eavesdropped at the time of providing the content decrypting key encrypted with the public key of the decoder to the decoder, and the eavesdropped key is reused thereafter. In addition, there is still another method in which encrypted content data and a license is provided to a decoder, and authentication of the license and decryption of the content is done inside the decoder. However, in ordinary cases, a license is dependent on a content distribution/replay service, and in addition, a decoder configured as hardware is unable to offer rewritability in its processing contents unlike software in most cases; this means that the decoder itself must be dependent on the content distribution/replay service in order for authentication of the license to be done inside the decoder, and as a result, a user needs to have more than one terminal each of which is provided dedicatedly for a specific content distribution/replay service.

Moreover, in a case where total time allowable for replay is described as condition of use, once it has reached the total time, content replay must be stopped automatically. For this purpose, it is necessary to measure the actual length of time taken for replay and to update a license by rewriting the condition of use, that is, it is necessary to subtract the actual length of time taken for replay from the length of total time allowable for replay which is described as the condition of use. Moreover, in a case where the allowable number of times of replay is described as condition of use, and in addition to that, the length of time for replay which is regarded as one execution of replay is described, it is necessary to update a license by rewriting the condition of use, that is, it is necessary to decrement the number of times of replay described as the condition of use by one, only when a replay is executed the length of time for replay regarded as one execution of replay.

To achieve this, some method performs measurement of replay time and update of a license inside a decoder. However, in ordinary cases, a license is dependent on a content distribution/replay service, and in addition, a decoder configured as hardware is unable to offer rewritability in its processing contens unlike software in most cases; this means that the decoder itself must be dependent on the content distribution/replay service in order for update of the license to be done inside the decoder, and as a result, a user needs to have more than one terminal each of which is provided dedicatedly for a specific content distribution/replay service.

Alternatively, there is some other method in which measurement of replay time and update of a license is done outside a decoder. It is difficult, however, to measure content replay time accurately outside a decoder. Content replay time means the actual length of time when content has been replayed; herein, mere measurement of the length of time from the point in time at which a user presses a "replay button" through the point in time at which the user presses a "stop button" does not provide any correct measurement value due to a time-lag which is attributable to the content-data-loading-time of a decoder taken before replay actually starts, and also due to other time-lags, nor does mere measurement of the data size of content data sent to a decoder give any correct measurement value because there is no guarantee that such data size is proportional to actual replay time; therefore, it is difficult to measure replay time accurately outside a decoder.

### DESCRIPTION OF THE INVENTION

It is an obj ect of the present invention to provide a content replay apparatus and a content replay control method with which secure and extensible content use control is implemented in general-purpose terminals.

According to an aspect of the present invention, a content replay apparatus comprises an acquisition section that acquires license data in which condition of use of content is described, a creation section that creates use authorization information which contains a replay command based on the license data in a case of compliance with the condition of use, a determination section that renders determination on the authenticity of the use authorization information, and a replay section that replays the content in accordance with the replay command in a case where the use authorization information is authenticated by the determination section.

According to another aspect of the present invention, a content replay control method comprises an acquisition step of acquiring license data describing condition of use of content, a creation step of creating use authorization information which contains a replay command based on the license data in a case of compliance with the condition of use, a determination step of rendering determination on the authenticity of the use authorization information, and a replay step of replaying the content in accordance with the replay command in a case where the use authorization information is authenticated in the determination step.

### BRIEF DESCRIPTION OF THE DRAWINGS

FIG. 1 is a block diagram illustrating the configuration of a content replay apparatus according to Embodiment 1 of the present invention;
FIG. 2 is a diagram illustrating the processing procedures in the content replay apparatus according to Embodiment 1 of the present invention;
FIG. 3 is a diagram illustrating the configuration of license data according to Embodiment 1 of the present invention;
FIG. 4 is a diagram illustrating the configuration of use authorization certificate according to Embodiment 1 of the present invention;
FIG. 5 is a diagram illustrating the contents of license data according to Embodiment 1 of the present invention;
FIG. 6 is a diagram illustrating the contents of use authorization information according to Embodiment 1 of the present invention;
FIG. 7 is a diagram illustrating the contents of license data according to Embodiment 1 of the present invention;
FIG. 8 is a diagram illustrating the contents of use authorization information according to Embodiment 1 of the present invention;
FIG. 9 is a block diagram illustrating the configuration of a content replay apparatus according to Embodiment 2 of the present invention;
FIG. 10 is a diagram illustrating the processing procedures in the content replay apparatus according to Embodiment 2 of the present invention;
FIG. 11 is a diagram illustrating the contents of use authorization information according to Embodiment 2 of the present invention;
FIG. 12 is a diagram illustrating the contents of license data according to Embodiment 2 of the present invention;
FIG. 13 is a diagram illustrating the contents of use authorization information according to Embodiment 2 of the present invention;
FIG. 14 is a diagram illustrating the contents of use authorization information according to Embodiment 2 of the present invention;
FIG. 15 is a diagram illustrating the contents of license data according to Embodiment 2 of the present invention;
FIG. 16 is a diagram illustrating the contents of use authorization information according to Embodiment 2 of the present invention;
FIG. 17 is a diagram illustrating the data structure of content according to Embodiment 3 of the present invention;
FIG. 18 is a diagram illustrating the data structure of a fingerprint according to Embodiment 3 of the present invention;
FIG. 19 is a diagram illustrating the processing procedures for acquisition of content according to Embodiment 3 of the present invention;
FIG. 20 is a diagram illustrating the procedures for processing of license purchase according to Embodiment 4 of the present invention;
FIG. 21 is a diagram illustrating the procedures for processing of content replay according to Embodiment 4 of the present invention;
FIG. 22 is a diagram illustrating the procedures for processing of license purchase according to Embodiment 5 of the present invention;
FIG. 23 is a diagram illustrating the procedures for processing of content replay according to Embodiment 5 of the present invention;
FIG. 24 is a diagram illustrating the procedures for processing of license purchase according to Embodiment 5 of the present invention;
FIG. 25 is a diagram illustrating the procedures for processing of content replay according to Embodiment 5 of the present invention;
FIG. 26 is a diagram illustrating the procedures for processing of license purchase according to Embodiment 6 of the present invention;
FIG. 27 is a diagram illustrating the procedures for processing of content replay according to Embodiment 6 of the present invention;
FIG. 28 is a diagram illustrating the procedures for processing of license upload according to Embodiment 7 of the present invention; and
FIG. 29 is a diagram illustrating the procedures for processing of license upload according to Embodiment 7 of the present invention.

### BEST MODE FOR CARRYING OUT THE INVENTION

In a content replay apparatus and a content replay control method of the present invention, a secure device having Tamper Resistant Module (TRM), a license processing application, and a decoder are used in combination. Specifically, the license processing application performs mutual authentication with the secure device, and then creates use authorization information to which a signature of the secure device is affixed. In the explanation given below, use authorization information to which a signature of the secure device is affixed is referred to as a use authorization certificate. A decoder I/F library renders a determination on the authenticity of the use authorization information and the signature. This prevents an act of so-called impersonation of the license processing application.

In addition, the decoder replays content only in a case where both of a content decrypting key and justifiable use authorization information are received. For example, assuming that it is an audio decoder, it is connected to a speaker. It is only one decoder in a content replay apparatus that is able to accept replay command issued to the decoder itself or to accept transfers of content data for replay. Use authorization information is designed to contain data which differs from others each time, such as time and date, and such data is stored into the decoder or the decoder I/F library.

In addition, use authorization information contains information such as "notify actual replay time when a replay has actually been executed" together with information on the number of times of replay and on replay time. Then, the decoder I/F library notifies replay time to the license processing application and issues a replay stop command to the decoder. The license processing application performs update of license data upon reception of a notification or a command from the decoder I/F library. This ensures correct control of content replay.

Embodiments of the present invention will be described in detail below with reference to the accompanying drawings.

### (Embodiment 1)

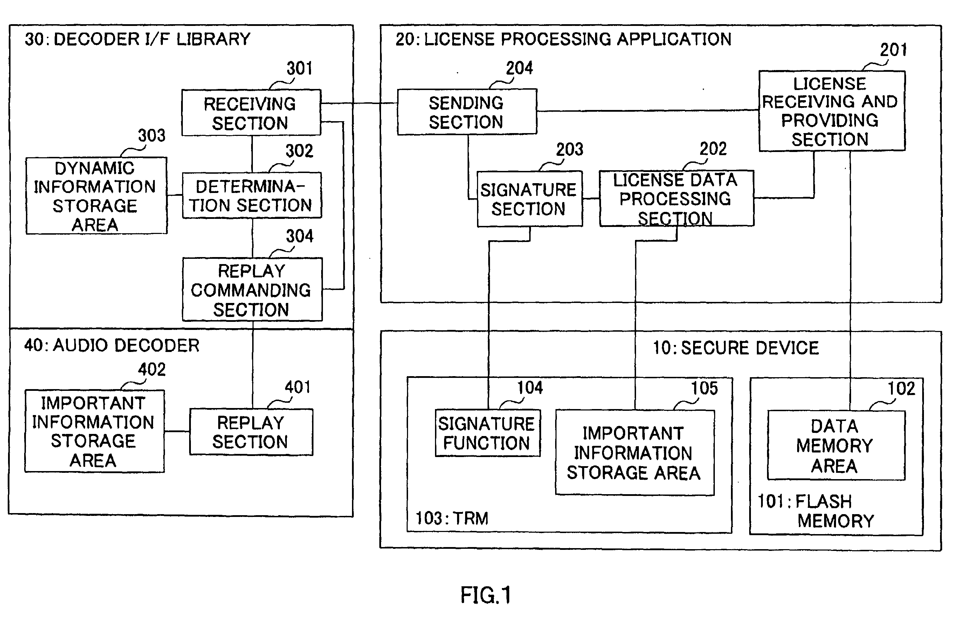

FIG. 1 is a block diagram illustrating the configuration of a content replay apparatus according to Embodiment 1 of the present invention. License processing application 20 is stored in a memory which is pre-mounted in the content replay apparatus. License processing application 20 is executed as, for example, Java library enhancement. In addition, the content replay apparatus comprises decoder I/F library 30 and audio decoder 40. Decoder I/F library 30 and audio decoder 40 are configured as hardware. Further in addition, secure device 10, which is a removable memory medium, is inserted in the content replay apparatus.

In secure device 10, flash memory 101 comprises data memory area 102, in which content acquired from a content server and a license for the content is stored. In addition, TRM 103 comprises signature function 104 such as WIM function defined by WAP Forum and important information storage area 105. Important information such as a fingerprint, etc. is stored in important information storage area 105.

In license processing application 20, license receiving and providing section 201 receives an encrypted content decrypting key and license data from secure device 10, andprovides the encrypted content decrypting key and the license data to license processing application 20. License data processing section 202 performs authentication of the fingerprint, update of the license data, creation of use authorization information, registration of the fingerprint in important information storage area 105, and storage of the updated license into data memory area 102 with the intermediation of license receiving and providing section 201. Signature section 203 receives the use authorization information from license data processing section 202 to create a digest, and creates a use authorization certificate, which is created by affixing the signature made by using signature function 104 of secure device 10 to the use authorization information. Sending section 204 receives the encrypted content decrypting key from license receiving and providing section 201, and the use authorization certificate from signature section 203, respectively, and attaches the use authorization certificate to the encrypted content decrypting key to send the encrypted content decrypting key and the certificate attached therewith to receiving section 301 in decoder I/F library 30.

In decoder I/F library 30, receiving section 301 receives the content decrypting key and the use authorization certificate which are sent from sending section 204 in license processing application 20, and then transfers the encrypted content decrypting key to replay commanding section 304 and the use authorization certificate to determination section 302. Determination section 302 receives the use authorization certificate from receiving section 301 and renders a determination on the authenticity of the signature and on the authenticity of the use authorization information by using dynamic information contained in the use authorization information. After determination, determination section 302 stores the dynamic information into dynamic information storage area 303, while the section 302 sends a replay command contained in the use authorization information to replay commanding section 304. Previous dynamic information is stored in dynamic information storage area 303. Replay commanding section 304 sends the replay command and the encrypted content decrypting key to audio decoder 40.

In audio decoder 40, replay section 401 decrypts the encrypted content decrypting key by using a decoder private key stored in important information storage area 402, and then decrypts and replays the content in accordance with the replay command.

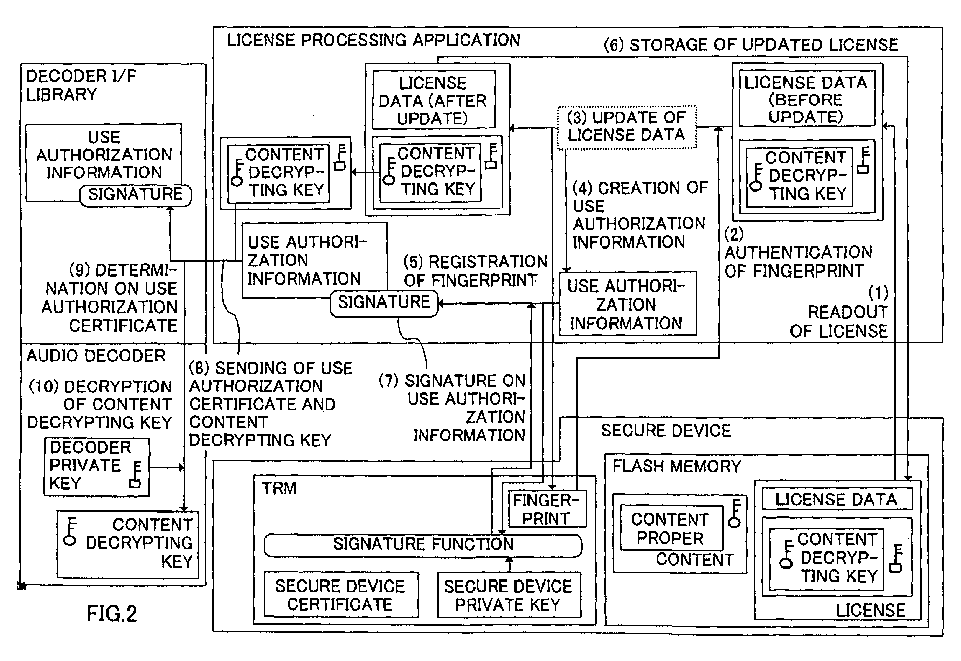

Next, processing procedures in a content replay apparatus according to this embodiment are described below with reference to FIG. 2.

Content proper encrypted with a content decrypting key is stored in flash memory in a secure device. The content decrypting key itself is encrypted using a decoder public key, and is stored in the flash memory together with license data. This license data is data which describes condition of use of content, such as the allowable number of times of content replay, the allowable length of time for content replay, and so forth. A license is composed of an encrypted content decrypting key and license data. The configuration of the license data is described later.

Processing procedures performed by the license processing application is as follows; (1) First of all, the license is read out of the flash memory, and the license is acquired. (2) Next, fingerprint authentication is carried out on the license data. (3) Then, license authentication and license data update is carried out. How it is updated will be specifically described later. (4) Then, in a case of conformance to the condition of use indicated by the license data, use authorization information is created based on the license data. The authenticity of this use authorization information is determined at a decoder I/F library. This use authorization information contains a replay command. How the use authorization information is created will be specifically described later. (5) Next, a fingerprint is created based on the updated license data, and the created fingerprint is registered in TRM in the secure device. (6) Next, the license which contains the updated license data is stored in the flash memory in the secure device. (7) Then, using the signature function of the secure device, a signature is affixed to the use authorization information. After affixation of the signature, the use authorization information becomes a use authorization certificate. The signature function of the secure device is implemented using a secure device private key. The right license processing application which has mutually authenticated with the secure device only is allowed to affix the signature to the use authorization information. (8) Then, the content decrypting key taken out of the license, with the use authorization certificate attached thereto, is sent to the decoder I/F library. The above processing procedures are done by the license processing application. Herein, processing in (6) may be performed immediately after processing in (7) or (8), or after processing in (9) described below.

(9) Next, at the decoder I/F library, the authenticity of the use authorization certificate attached to the content decrypting key is determined. That is, a determination is rendered on the authenticity of the signature and on the authenticity of the use authorization information to further determine whether the content is allowable for use or not. Then, in a case where the signature is determined as authentic and the use authorization information is determined as justifiable, replay of the content is authorized. The authenticity of the signature is determined by using a secure device certificate. The secure device certificate is acquired together with the content decrypting key and the use authorization certificate in the above processing (8). Alternatively, it may be pre-acquired separately from procedures herein. The authenticity of the use authorization information is determined based on dynamic information contained in the use authorization information. (10) Then, at an audio decoder, the content is replayed in accordance with the replay command only in a case where its authenticity is verified at the decoder I/F library. That is, at the audio decoder, the content is replayed by decrypting the content proper with the content decrypting key, which is done after decrypting of the content decrypting key itself with a decoder private key.

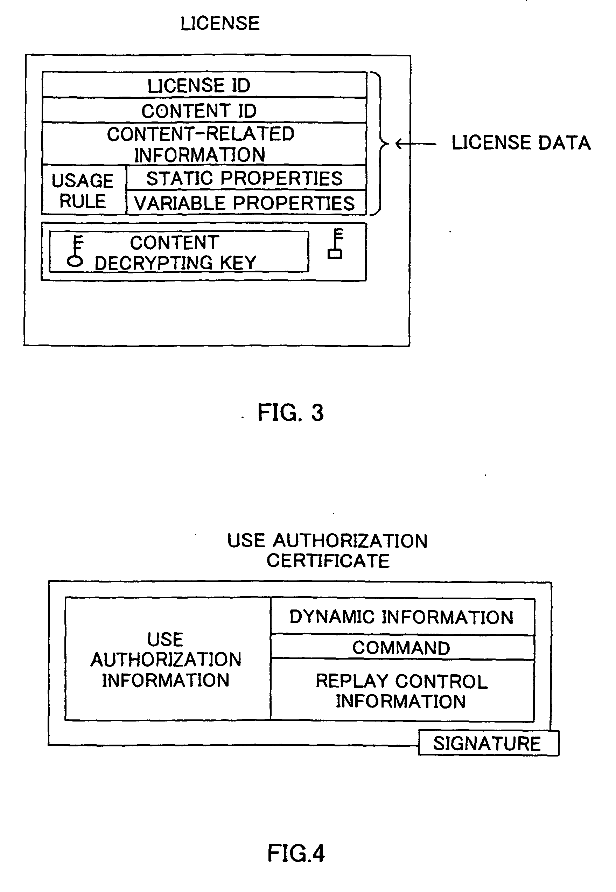

Next, the configuration of license data is described below with reference to FIG. 3. As illustrated in FIG. 3, license data, together with a content decrypting key encrypted with a decoder public key, makes up a license. A license data is composed of a license ID, a content ID, content-related information, and Usage Rule. Usage Rule is composed of Static Properties and Variable Properties.

The content-related information contains, in a case where the content is music, music title name and artist name.

Usage Rule is where condition of use of content is described, and Static Properties contain information which is not subject to update by a license processing application, such as a time limit for content replay, etc., whereas Variable Properties contain information which is subject to update at each occasion of content replay, such as the allowable number of times of replay, the allowable length of time for replay, and so on.

Next, the configuration of a use authorization certificate is described below with reference to FIG. 4. As described above, a use authorization certificate is use authorization information to which a signature made by a secure device is affixed. In other words, a use authorization certificate certifies that a license is verified inside a license processing application.

Use authorization information is composed of dynamic information, a command such as a replay command, and replay control information. In a case of conformance to condition of use indicated by the license data, this use authorization information is created mainly based on Usage Rule of the license data.

Dynamic information is information having a value different from others at each creation of use authorization information. For example, it is information indicating the time and date in which the usage authorization information is created, a random number, a serial number, and so forth. Through the comparison of previous dynamic information with current dynamic information, a decoder I/F library renders a determination on the authenticity of the use authorization information to further determine whether the content is allowable for use or not. Specifically, a determination is made as follows.

In a case where the dynamic information is time and date information or a random number, all of the dynamic information hereto is stored. Then, in a case where any use authorization information which contains current dynamic information identical to any previous one is inputted into the decoder I/F library again, then it is taken as an act of so-called impersonation of the license processing application, and the authenticity of the use authorization information is denied, and the content is therefore not replayed. On the contrary, in a case where any use authorization information which contains current dynamic information not identical to any previous one is inputted into the decoder I/F library, the authenticity of the use authorization information is acknowledged to replay the content.

In a case where dynamic information takes a form of a serial number, the last dynamic information (serial number n) is stored. Then, only in a case where current dynamic information contained in the use authorization information which is currently inputted into the decoder I/F library is "n+1", the authenticity of the use authorization information is acknowledged to replay the content. In addition, the relational rule between the last dynamic information and current dynamic information may be a decrement "-1" or a multiple "x2"; in such a case, the authenticity of a certain use authorization information is acknowledged only in a case where the use authorization information has current dynamic information which is in compliance with the arranged rule among these rules and such information is inputted. Alternatively, in a case where it is stipulated as the rule that current dynamic information must be lesser/greater than previous dynamic information, the authenticity of use authorization information is acknowledged only in a case where the current dynamic information is lesser/greater than the previous dynamic information.

The rule which stipulates that current dynamic information must be greater than any previous dynamic information is possible to be applied to time and date information, too. For example, supposing that the earliest creation date according to use authorization information is March 4, 2002, the second earliest creation date according to another use authorization information is March 7, 2002, and the third earliest creation date according to further another use authorization information is March 9, 2002. In a case where the use authorization information containing these time and date information is inputted into the decoder I/F library in the order of the earliest → the second earliest → the third earliest, a comparison of these time and date information shows that one inputted later has a greater value, therefore in such a case the authenticity of the use authorization information is acknowledged for each of the earliest, the second earliest, and the third earliest inputs, and the content is thereby replayed. In contrast, in a case where the use authorization information which has the second earliest time and date information is inputted into the decoder I/F library later than the further another use authorization information which has the third earliest time and date information, then a comparison of these time and date information shows that the second earliest time and date information has a lesser value than that of the third earliest time and date information, which results in that the authenticity of the use authorization information which has the second earliest time and date information is denied, and therefore the content is thereby not replayed.

In this way, through the incorporation of dynamic information having a value different from others at each creation of use authorization information into the use authorization information, it is possible to prevent unauthorized use of a content decrypting key, that is, an act of so-called impersonation of a license processing application.

Next, an explanation on how to set use authorization information commands and replay control information is given below.

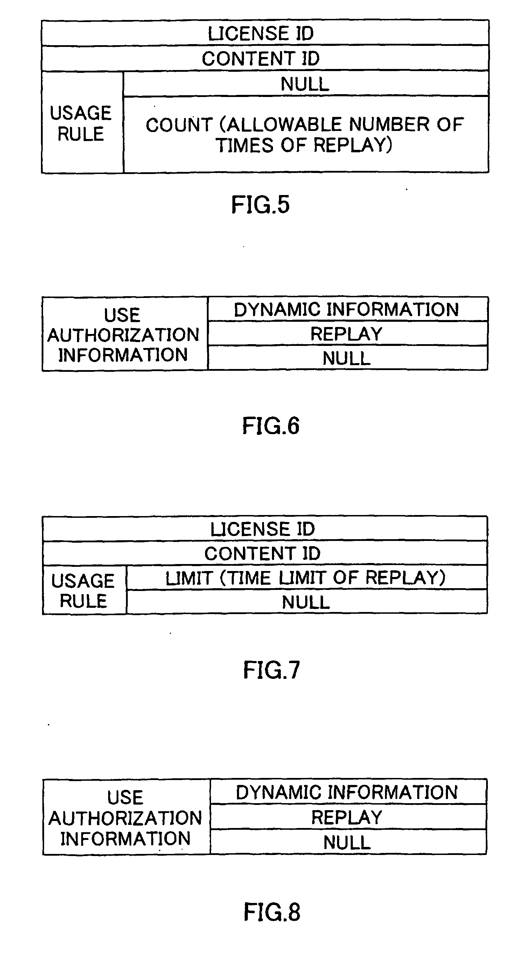

First of all, as illustrated in FIG. 5, an explanation is given on a case where Static Properties of Usage Rule is "Null" while Variable Properties of Usage Rule is "Count (allowable number of times for replay)." In such a case, replay control is done according to the number of times of replay. That is, in license data update processing, Count is decremented by one (Count - 1) in a case where "Count ≧1", thereby updating the license data. In addition, in a case where "Count ≧1", then it does not conflict with the condition of use, therefore, use authorization information as illustrated in FIG. 6 is created. In other words, use authorization information with a command "REPLAY" and replay control information "NULL" is created. This authentication and update of a license as well as the creation of use authorization information is done by the license processing application. The content is replayed just once in accordance with the replay command contained in this use authorization information. Accordingly, it is possible to have the content be replayed no more than the number of times described in the original "Count." In contrast, in a case where "Count = 0", then it is not in compliance with the condition of use, therefore, no use authorization information is created. Accordingly, in a case where "Count = 0", the content is not replayed.

Next, as illustrated in FIG. 7, an explanation is given on a case where Static Properties of Usage Rule is "Limit (replay time limit)" while Variable Properties of Usage Rule is "NULL." In this case, replay control is done according to the replay period. In other words, in a case where the time and date of the creation of use authorization information is before "Limit", replay does not conflict with the condition of use, so use authorization information with a command "REPLAY" and replay control information "NULL" is created as illustrated in FIG. 8. This authentication and update of a license as well as the creation of use authorization information is done by the license processing application. The content is replayed just once in accordance with the replay command contained in this use authorization information. Accordingly, it is possible to have the content be replayed up to the point in time described in the "Limit." In contrast, in a case where the time and date of the creation of the use authorization information is not before "Limit", replay conflicts with the condition of use, therefore, no use authorization information is created. Accordingly, in a case where the time and date of the creation of the use authorization information is not before "Limit", the content is not replayed.

Herein, as for setting of "Limit (replay time limit)", the following three patterns are conceivable; that is, (1) a license which describes a time limit for replay is sold from a content server. (2) A license which describes an allowable period for replay is sold from a content server, where a terminal sets a time limit replay according to the allowable period for replay at the time of storing the license into its flash memory. For example, in a case where an allowable period for replay (e.g. 2 weeks) is described in license data sent from a content server to a terminal, "Limit (replay time limit) " is set at the terminal side at the point in time of "the time and date of the storage of the license data + the allowable period for replay described in the license data) at the time of storing the license into its flash memory. (3) A license which describes an allowable period for replay is sold from a content server, where a terminal sets a time limit for replay according to the allowable period for replay at the time of the initial replay of the content. For example, in a case where an allowable period for replay (e. g. 2 weeks) is described in license data sent from a content server to a terminal, "Limit (replay time limit) " is set at the terminal side at the point in time of "the time and date of the initial replay + the allowable period for replay described in the license data) at the time of the initial replay of the content.

Herein, a plurality of the license processing applications may reside in the content replay apparatus. For example, a plurality of license processing applications, each of which differs from others and is provided dedicatedly for a specific content distribution/replay service, may reside in a single identical content replay apparatus.

Additionally, the important information storage area for storing the decoder private key may be provided in the decoder I/F library instead of the decoder, where in such a case decrypting of the content is carried out in the decoder I/F library.

In addition, in such a case where the data size of the license data is small, the license data may be stored in TRM of the secure device rather than in the flash memory of the secure device.

Moreover, although Variable Properties of Usage Rule in the license data is information which is subject to update, it may be divided into two parts, that is, default value part which is not subject to update and current value part which is subject to update, where in such a case only the current value part is updated.

Moreover, the decoder and the decoder I/F library also support plaintext content for which no corresponding license exists, that is, normal content which is not protected by a copyright. In a case where plaintext content data is provided to the decoder I/F library, it is possible to replay the content data even when no use authorization information is attached thereto.

Moreover, the content and the license may be stored into the flash memory after conversion of their format from original one in which they are at the time of acquisition by the content replay apparatus. More specifically, the content protection format and the license protection format may be converted from one at the time of distribution into a specialized format for java library enhancement or a secure device application.

Furthermore, although Variable Properties of the license are subject to update at each replay of the content, the dynamic information may be retained outside the license instead of inside Variable Properties of the license, where the license itself is not subject to update while a link between the license and the dynamic information outside is maintained.

Still furthermore, at the time of content replay, content type may be checked before performing processing on the license in order to perform actual processing on the license only in a case where the content can be replayed by the content replay processing apparatus. This makes it possible to prevent the license from being consumed against any content which can not be replayed.

In this way, according to the present embodiment, replay of content is authorized only in a case where the authenticity of use authorization information is acknowledged wherein the use authorization information is created based on license data which describes condition of use for the content, it is possible to prevent eavesdropping of content data or an act of so-called impersonation of a license processing application, thereby further preventing unauthorized use of the content. Additionally, because the authenticity of use authorization information is determined using dynamic information which has a value different from others at each creation of use authorization information, it is possible to determine the authenticity of the use authorization information correctly, and it is also possible to prevent unauthorized reuse of the use authorization information which has already been created once, which makes it further possible to correctly determine whether the content is allowable for use or not. Furthermore, because a signature of the secure device is affixed to the use authorization information, it is possible to prevent the use authorization information from being tampered.

### (Embodiment 2)

A content replay apparatus according to this embodiment incorporates replay control information for performing accurate replay control into use authorization information without losing its general versatility. In addition, a license processing application incorporates a notification command for notifying the result or the progress of content replay into the use authorization information as control information, and a decoder I/F library notifies the result or the progress of the content replay to the license processing application in accordance with the notification command. In addition, the license processing application updates license data in accordance with the notification of the result or the progress of the content replay.

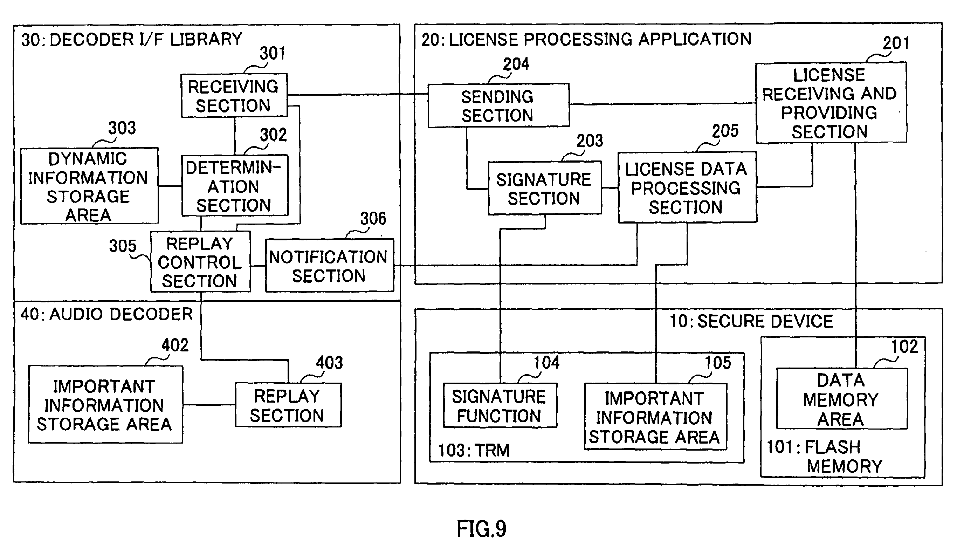

FIG. 9 is a block diagram illustrating the configuration of a content replay apparatus according to Embodiment 2 of the present invention. The sections in FIG. 9 identical to those in Embodiment 1 (FIG. 1) will be assigned the same reference numerals as therein, and further descriptions are omitted here.

In license processing application 20, license data processing section 205 performs authentication of a fingerprint and creation of use authorization information. After receiving a notification fromdecoder I/F library 30, the section 205 further performs update of license data, registration of the fingerprint in important information storage area 105, and storage of the updated license into data memory area 102 with the intermediation of license receiving and providing section 201. That is, after creation of the use authorization information, the section 205 is on standby until the notification is received from decoder I/F library 30. As explained above, the difference between this embodiment and Embodiment 1 lies in that, in this embodiment, license data processing section 205 updates the license data in accordance with the notification from decoder I/F library 30.

In decoder I/F library 30, replay control section 305 sends a replay command and an encrypted content decrypting key to audio decoder 40 in accordance with replay control information sent from determination section 302. Additionally, the section 305 performs content replay control (measurement of duration of replay, counting of the number of times of replay, stopping of replay, and so on) based on the replay control information, and thereafter creates data for notifying the result or progress of the replay (data indicating actual duration of the replay, actual number of times of the replay, completion of the replay, and so forth) as commanded in the replay control information to send the created data to notification section 306. Notification section 306 notifies the data created by replay control section 305 to license data processing section 205 in license processing application 20.

In audio decoder 40, replay section 403 decrypts the encrypted content decrypting key by using a decoder private key stored in important information storage area 402, and then decrypts and replays the content in accordance with the replay command. Additionally, replay of the content is stopped in accordance with a replay stop command from replay control section 305.

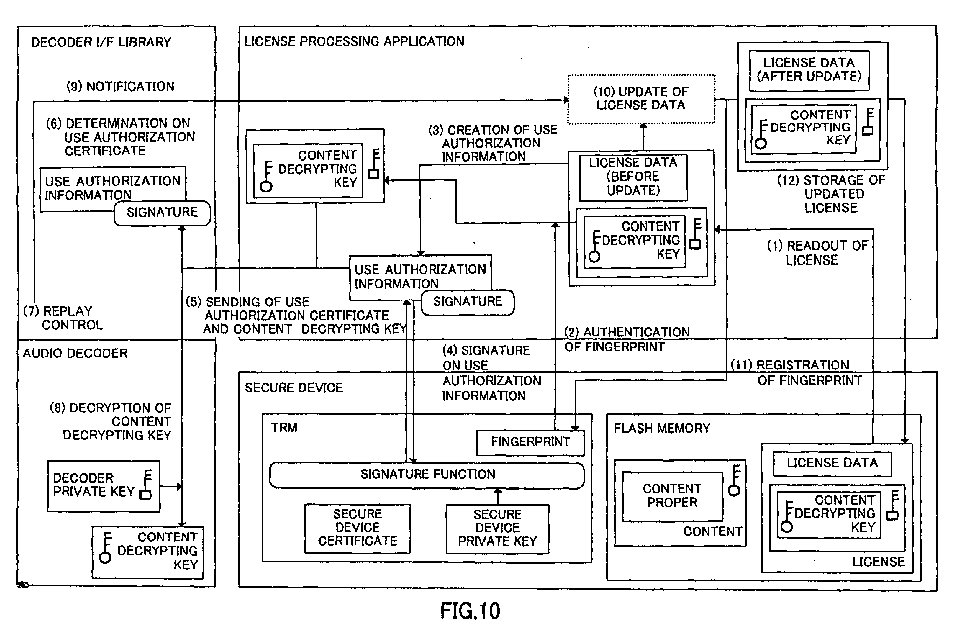

Next, processing procedures in a content replay apparatus according to this embodiment will be described below with reference to FIG. 10.

(1) First of all, a license is read out of flash memory, and the license is acquired in a license processing application. (2) Next, fingerprint authentication is carried out on license data. (3) Then, authentication of the license is performed, and in a case of conformance to condition of use indicated by the license data, use authorization information is created based on the license data. The use authorization information contains replay control information for carrying out replay control in compliance with the condition of use of content. Additionally, the use authorization information contains a notification command for notifying the result or the progress of content replay. (4) Then, using the signature function of a secure device, a signature is affixed to the use authorization information. After affixation of the signature, the use authorization information becomes a use authorization certificate. (5) Then, a content decrypting key taken out of the license, with the use authorization certificate attached thereto, is sent to a decoder I/F library. (6) Next, at the decoder I/F library, the authenticity of the use authorization certificate attached to the content decrypting key is determined. That is, a determination is rendered on the authenticity of the signature and on the authenticity of the use authorization information to further determine whether the content is allowable for use or not. Then, in a case where the signature is determined as authentic and the use authorization information is determined as justifiable, replay of the content is authorized. (7) Then, in a case where the replay of the content is authorized, replay control such as control on the number of times of replay, on the duration of replay, on the quality of replay, and so forth, is performed in accordance with the replay control information contained in the use authorization information. (8) Then, at an audio decoder, the content is replayed in accordance with the replay command only in a case where its authenticity is verified at the decoder I/F library. That is, at the audio decoder, the content is replayed by decrypting the content proper with the content decrypting key, which is done after decrypting of the content decrypting key itself with a decoder private key. At this time, the content replay is performed in accordance with the replay control from the decoder I/F library. (9) Next, the decoder I/F library notifies the result or the progress of the content replay to the license processing application in accordance with the notification command contained in the use authorization information. (10) Upon receiving the notification of the result or the progress of the replay; the license processing application updates the license data in accordance with this notification. (11) Next, a fingerprint is created based on the updated license data, and the created fingerprint is registered in TRM in the secure device. (12) Next, the license which contains the updated license data is stored in the flash memory in the secure device. Alternatively, the license may be stored temporarily in the flash memory of the secure device after the processing in (3), and be read out from the flash memory in the secure device again before the processing in (11).

Further alternatively, the decoder I/F library may store the replay control information as well as the result or the progres s of the content replay in a nonvolatile memory, and then such stored information may be erased after the notification of the result or the progress of the replay to the license processing application. In a case where any replay control information, or the result or progress of the replay remains without having been erased in the nonvolatile memory of the decoder I/F library on startup of the content replay apparatus, it indicates that the processing has terminated in an unexpected abnormal state before the update of the license data is carried through. In such a case, processing may be resumed at (9) above. In this way, even under a case where the processing has been aborted, before the update of the license, due to, for example, power supply cut-off, and so forth, still it is possible to retain the information of the result or the progress of the replay, which makes it further possible to update the license correctly.

Next, an explanation on how to set use authorization information commands and replay control information is given below.

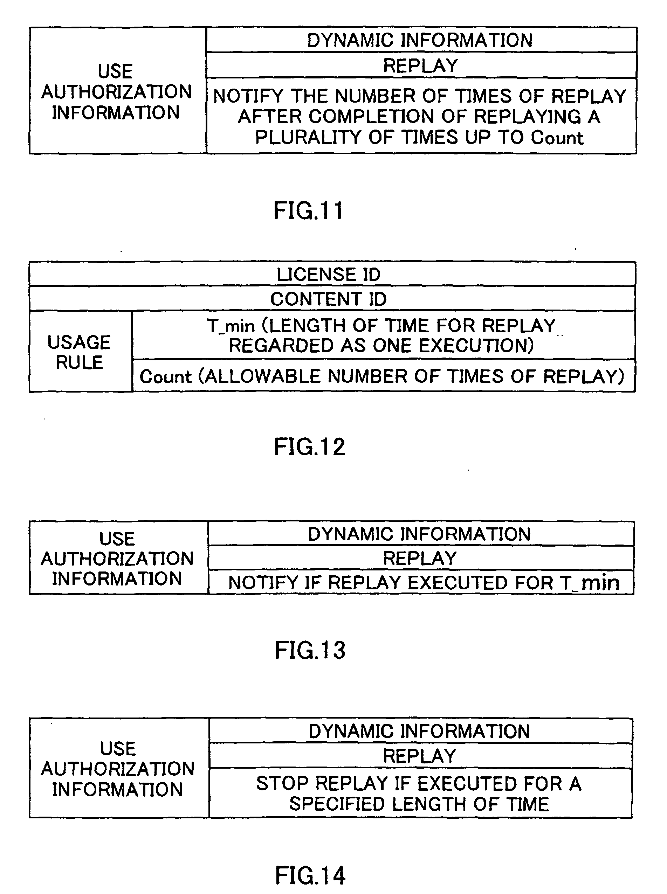

First of all, as illustrated in license data in FIG. 5, an explanation is given on a case where Static Properties of Usage Rule is "Null" while Variable Properties of Usage Rule is "Count (allowable number of times for replay)", and in addition to that, consecutive replay is commanded by a user. In such a case, replay control is done according to the number of times of replay. In other words, when "Count ≧1", replay does not conflict with the condition of use, so use authorization information with a command "REPLAY" and replay control information "Execute replay a plurality of times less than the number of times described as Count, and notify the actual number of times of the replay upon completion of the replay" is created as illustrated in FIG. 11. The content is replayed a plurality of times "C_play" (limitation: in numbers less than Count) in accordance with the replay command and the replay control information contained in this use authorization information. After replaying the content the plurality of times, the result of the replay, specifically, the number of times of the replay "C_play" is notified to a license processing application from a decoder I/F library. Upon receiving this notification of the replay result, the license processing application updates the license data by decrementing "Count (allowable number of times for replay) " of the license data illustrated in FIG. 5 by "C_play." In this way, it is possible to execute consecutive replay a plurality of times.

Alternatively, as another method for controlling the number of times of replay, a replay command which authorizes replay less than the desired number of times, which is commanded by a user, may be created, and thereafter creation of use authorization information and update of license data may be repeated until the actual number of times of the replay reaches the desired number of times commanded by the user.

Specifically, for example, replay control according to the number of times of replay may be done as detailed below in a case where Static Properties of Usage Rule is "Null" while Variable Properties of Usage Rule is "Count (allowable number of times for replay)", and in addition to that, consecutive replay is commanded by a user. In other words, when "Count ≧1", replay does not conflict with the condition of use, so use authorization information with a command "REPLAY" and replay control information "Notify the completion of the replay to the license processing application" is created. Then the content is replayed once in accordance with the replay command and the replay control information contained in this use authorization information, and the completion of the replay is notified to the license processing application from the decoder I/F library. Each time of receiving this notification of the replay result, the license processing application updates the license data by decrementing "Count (allowable number of times for replay)" of the license data by one. Then, at each time of license update, a verification is done to check whether "Count ≧1" or not, and when "Count ≧ 1", use authorization information with a command "REPLAY" and replay control information "Notify the completion of the replay to the license processing application" is created. Consecutive replay is also able to be executed a plurality of times by repeating the above processing. This saves the decoder I/F library the burden of managing the number of times of replay, which reduces the processing load on the decoder I/F library. Herein, the number of times of replay (unit number of decrement for condition of use) may be a plural number instead of one, and further it may be variable number which varies at each execution.

Further herein, the counting of the number of times of replay at the decoder I/F library could be performed in the following way; for example, replay of the content through its end is counted as one execution, reverse of the content in midstream of replay is also counted as one execution, and termination of content replay in midstream is counted as one execution, too.

Additionally, as for notification, a notification may be given not only to the license processing application but also to the user of the content replay apparatus. For example, the updated number of times of replay may be displayed on a liquid crystal display, etc., after completion of the replay. Likewise, in a description given below, a notification may also be given to the user of the content replay apparatus.

Next, as illustrated in license data in FIG. 12, an explanation is given on a case where Static Properties of Usage Rule is "T_min (duration of replay which is regarded as one execution of replay)" while Variable Properties of Usage Rule is "Count (allowable number of times of replay)." As illustrated in FIG. 13, when "Count ≧1", replay does not conflict with the condition of use, so use authorization information with a command "REPLAY" and replay control information "Execute replay once and notify its completion to the license processing application at the point in time of halfway completion of the T_min length of the replay" is created. The content is replayed only once in accordance with the replay command and the replay control information contained in this use authorization information. Then, at the point in time of the elapsing of "T_min" in midstream of the replay, the progress of the replay, specifically, the elapsing of "T_min" is notified to a license processing application from a decoder I/F library. At this time, the replay of the content continues. Upon receiving this notification of the replay progress, the license processing application updates the license data by decrementing "Count (allowable number of times for replay)" of the license data illustrated in FIG. 12 by one. Meanwhile, in a case where replay is not carried through until "T_mim" elapses, a notification of such an incomplete execution is sent to the license processing application from the decoder I/F library. In a case where replay is not carried through until "T_min" elapses, the license data is not updated. This enables a control for disregarding replay for short duration, which is not counted as one execution of replay.

Herein, in measurement of the elapsed time of replay at the decoder I/F library, such time as temporarily replay pause period is not taken into measurement when measuring the replay time.

Additionally, in a case of license data illustrated in FIG. 12, use authorization information with a command "REPLAY" and replay control information "Execute replay once and send a notification to the license processing application at each completion of the T_min length of the replay" may be created. In a case where such use authorization information is created, during content replay, at each time when "T_mim" elapses, a notification of the elapsing of "T_min" is sent to the license processing application from the decoder I/F library as a replay progress notification. At this time, the replay of the content continues. Each time of receiving this notification of the replay progress, the license processing application updates the license data illustrated in FIG. 12 by decrementing "Count (allowable number of times for replay)" of the license data by one.

Next, as illustrated in license data in FIG. 7, an explanation is given on a case where Static Properties of Usage Rule is "Limit (replay time limit)" while Variable Properties of Usage Rule is "NULL." In this case, replay control is done according to the replay period. That is, in a case where the time and date of the creation of the use authorization information is before "Limit", replay does not conflict with the condition of use, so use authorization information with a command "REPLAY" and replay control information "Replay within a specified duration (Limit-current time anddate) " is created as illustrated in FIG. 14. The content is replayed within the specified duration in accordance with the replay command and the replay control information contained in this use authorization information. In other words, replay is stopped at the point in time where replay is executed for the specified duration. In this way, it is possible to attain exact replay control on a time period basis.

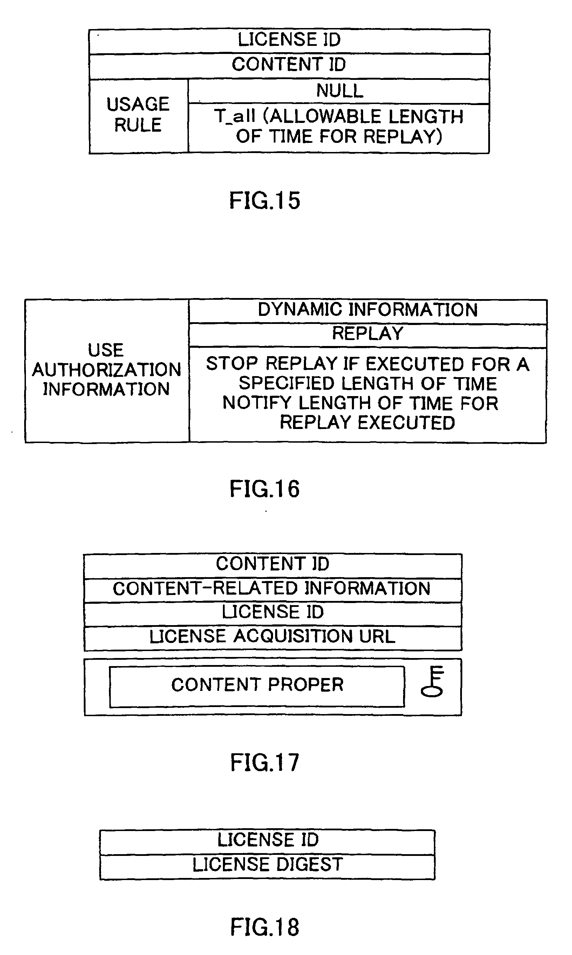

Next, as illustrated in license data in FIG. 15, an explanation is given on a case where Static Properties of Usage Rule is "Null" while Variable Properties of Usage Rule is "T_all (allowable length of time for replay)." As illustrated in FIG. 16, when "T_all > 0", replay does not conflict with the condition of use, so use authorization information with a command "REPLAY" and replay control information "Execute replay within the duration of T_all, and upon completion of the replay, notify the actual replay time T_play to the license processing application" is created. The content is replayed within "T_all" in accordance with the replay command and the replay control information contained in this use authorization information. In other words, replay is stopped at the point in time where replay is executed for "T_all". After the replay, the actual time length of replay "T_play" is notified to a license processing application from a decoder I/F library. Upon receiving this notification, the license processing application updates the license data by decrementing "T_all (allowable length of time for replay)" of the license data illustrated in FIG. 15 by "T_play."

Alternatively, in a replay control method according to the allowable number of times of replay or the allowable length of time of replay, replay may be stopped in the following steps: when a replay is executed for the specified length of time or executed the specified number of times, then, a notification of the execution of the replay is sent to the license processing application, and then the license processing application creates use authorization information with a command "STOP" and send the created information to the decoder I/F library in the same way as done at the time of the replay, and the decoder I/F library sends the stop command to the audio decoder to stop replay.

Other than the number of times of replay or the length of time of replay like these, various kinds of information may be set in replay control information for performing replay control. As an example, it is possible to make settings of replay quality such as sound quality or image quality therein. For example, when sound quality is set in replay control information, an audio decoder replays music content in the set sound quality.

In this embodiment, to perform replay in compliance with the condition of use of a license, authentication of the license is done in a license processing application while use authentication information is authenticated in a decoder I/F library. At a license processing application, it is hard to measure and control actual replay time, replay quality, or replay range, etc. accurately. In addition, when a decoder I/F library was supposed to take charge of all control, then, it would become necessary for the decoder I/F library to be dependent on a license format, etc., and as a result, it follows that a decoder I/F library dependent on a content distribution/replay service would become necessary. Accordingly, the task of measurement and control of actual replay time, replay quality, or replay range, etc. is assigned to a decoder I/F library, and other control which depends on a content distribution/replay service is assigned to a license processing application.

As explained above, according to this embodiment, accurate replay control is ensured without losing the general versatility of a content replay apparatus because replay control information for performing replay control is incorporated in use authorization information.

That is, in a case where the allowable number of times of replay is described as the condition of use of a license, it is possible to measure the number of times of content replay, which makes it further possible to limit the allowable number of times of replay without losing the general versatility of a content replay apparatus. Alternatively, in a case where the allowable length of time of replay is described as the condition of use of a license, it is possible to measure the accurate length of time of content replay, which makes it further possible to limit the allowable length of time of replay without losing the general versatility of a content replay apparatus. In addition, in a case where the quality of replay is described as the condition of use of a license, it is possible to specify the replay quality of content, which makes it further possible to limit the replay quality without losing the general versatilityof a content replay apparatus. Furthermore, in a case where, for example, the allowable number of times of replay and the minimum length of time of the replay which is regarded as one execution of replay is described as the condition of use of a license, it is possible to measure content replay time, which makes it further possible to limit the allowable number of times of replay without losing the general versatility of a content replay apparatus.

In addition, in a case where, for example, the allowable length of time of replay is described as the condition of use of a license, it is possible to measure the accurate length of time of content replay, and to update the license by rewriting the allowable length of time of replay described in the condition of use of the license based on the measured time. Further in addition, in a case where, for example, the allowable number of times of replay and the minimum length of time of the replay which is regarded as one execution of replay is described as the condition of use of a license, it is possible to measure the accurate length of time of content replay, and to update the license by rewriting the allowable number of times of replay described in the condition of use of the license based on the measured time. Accordingly, it is possible to limit the number of times of replay or the length of time of replay without losing the versatility of a content replay apparatus.

### (Embodiment 3)

In this embodiment, the data structure of content, the data structure of a fingerprint, and the acquisition method of content from a content server is described.

The data structure of content is illustrated in FIG. 17. Specifically, it is composed of a content ID, content-related information, a license ID, a license acquisition URL, and content proper encrypted with a content decrypting key. Content-related information is information related to content, such as music title name and artist name, for example, in a case where the content is music. A license ID is the ID of the license corresponding to content, and in some cases, a plurality of licenses could correspond to a single content. For example, a license with no limitation on the number of times of replay and a "trial" license which allows only 10 times of replay may be offered for a single content, and each license may be sold for a different price from the other. A license acquisition URL is a URL which is referred to at the time of license acquisition (purchase). Content proper includes, but without limitation, music data, video data, image data, document data, and program data. Sometimes content proper contains a plurality of types of data such as music, its jacket image, and its lyrics data, where in such a case each type of data may be encrypted with a content decrypting key different from the other.

The data structure of a fingerprint is illustrated in FIG. 18. Specifically, it is composed of a license ID and a license digest. A license digest is the hashed data of license data.

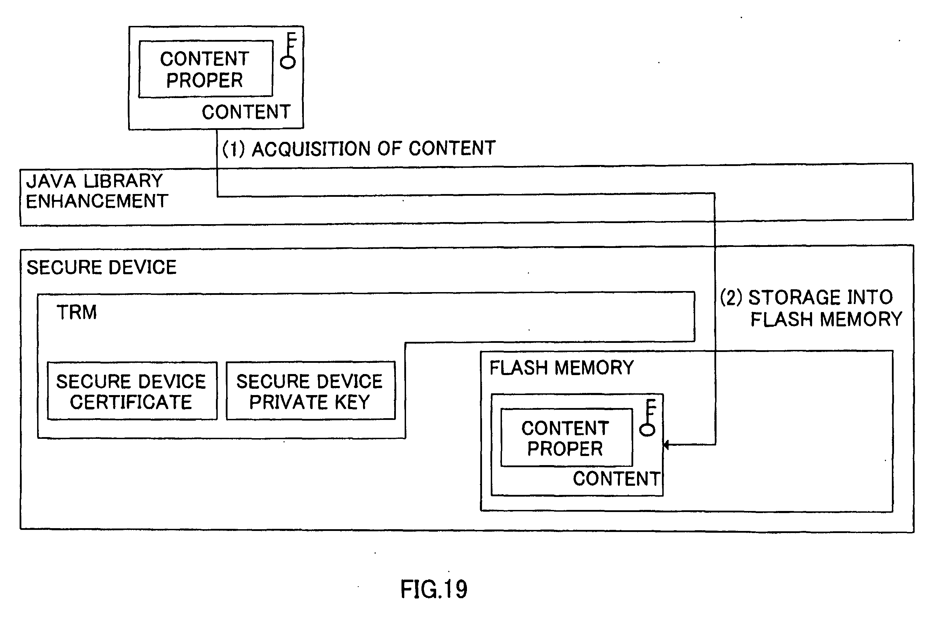

Next, a method of acquisition of content from a content server is described below with reference to FIG. 19. Processing procedures for content acquisition are as follows; That is, (1) a content acquisition application in a content replay apparatus downloads content from a content server, and transfers the content to java library enhancement. (2) The downloaded content is stored into flash memory in a secure device through the java library enhancement.

Herein, either of content acquisition and license purchase, which will be described later, may be done first as long as both content and a license are on hand at the time of replay.

### (Embodiment 4)

In this embodiment, an explanation is given on a case where a content decrypting key is encrypted with a decoder public key, and the content decrypting key is further encrypted with a secure device public key. In addition, this embodiment describes a case where downloaded license is signed by a download server. In these cases, license purchase processing and content replay processing are done as follows.

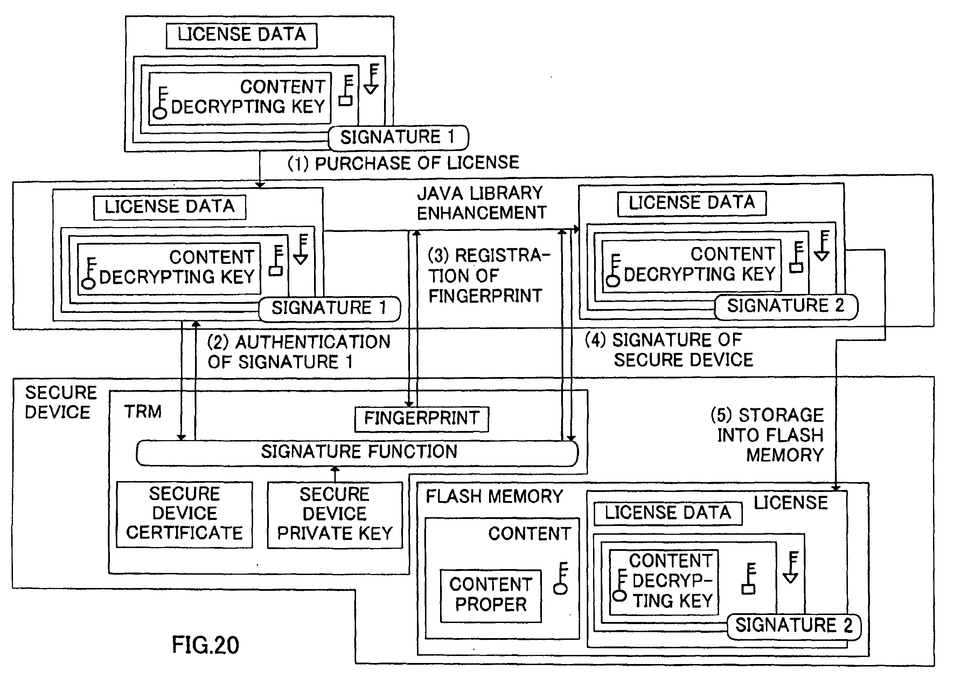

FIG. 20 is a diagram illustrating the procedures for the processing of license purchase according to this embodiment. (1) First, a content purchase application in a content replay apparatus downloads (purchases) a license from a content server, and provides the license to java library enhancement. A signature is affixed to this license by a download server (signature 1). (2) Then, using the signature function of TRM in a secure device, authentication of signature 1 is carried out by the java library enhancement to render a determination on the authenticity of the signature. (3) Then, the fingerprint of the license is stored in TRM. (4) Next, using a secure device private key, TRM re-affixes a signature (signature 2) . That is, signature I is replaced with signature 2. The reason why the re-affixing of the signature is done is because license data is subject to update at the time of content replay. (5) The license after re-affixing of the signature is stored into flash memory in the secure device. As described above, the purchased license is stored into the flash memory in the secure device through the java library enhancement.

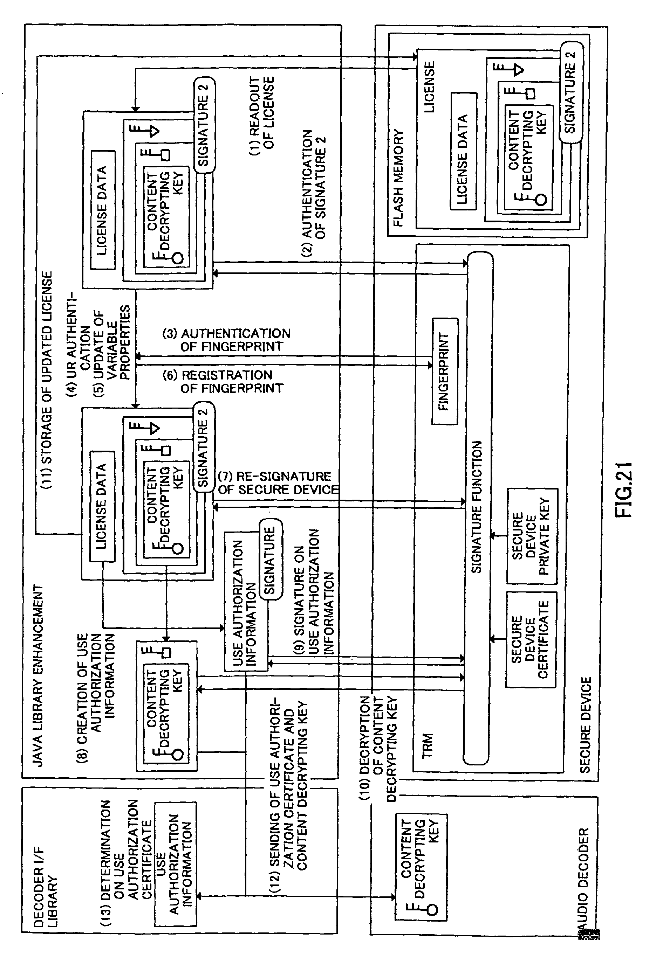

FIG. 21 is a diagram illustrating the procedures for the processing of content replay according to this embodiment. (1) First of all, the license is read out of the flash memory to the java library enhancement. (2) Then, using the signature function in the secure device, authentication of signature 2 is carried out to render a determination on the authenticity of signature 2. (3) Next, fingerprint authentication is carried out on the license data. (4) Next, authentication is carried out on Usage Rule of the license data. (5) Next, Variable Properties of the license data is updated. (6) Next, a fingerprint is created based on the updated license data, and the created fingerprint is registered in TRM in the secure device. (7) Then, using the signature function of the secure device, a signature is re-affixed. (8) Then, in a case of conformance to the condition of use indicated by the content data, use authorization information is created based on the license data. (9) Then, using the signature function of the secure device, a signature is affixed to the use authorization information. After affixation of the signature, the use authorization information becomes a use authorization certificate. (10) Next, the content decrypting key is decrypted using the secure device private key. At this stage, the content decrypting key is still encrypted with the decoder public key. (11) Next, the license which contains the updated license data is stored in the flash memory in the secure device. (12) Then, the content decrypting key taken out of the license, with the use authorization certificate attached thereto, is sent to the decoder I/F library. (13) Next, at the decoder I/F library, the authenticity of the use authorization certificate attached to the content decrypting key is determined. Then, at the audio decoder, the content is replayed in accordance with the replay command only in a case where its authenticity is verified at the decoder I/F library. That is, at the audio decoder, the content is replayed by decrypting the content proper with the content decrypting key, which is done after decrypting of the content decrypting key itself with the decoder private key.

### (Embodiment 5)

In this embodiment, an explanation is given on a case where a content decrypting key is encrypted by a secure device public key. In addition, the explanation is given on a case where a series of processing on a purchased license is done in TRM of a secure device. In these cases, license purchase processing and content replay processing are done as follows.

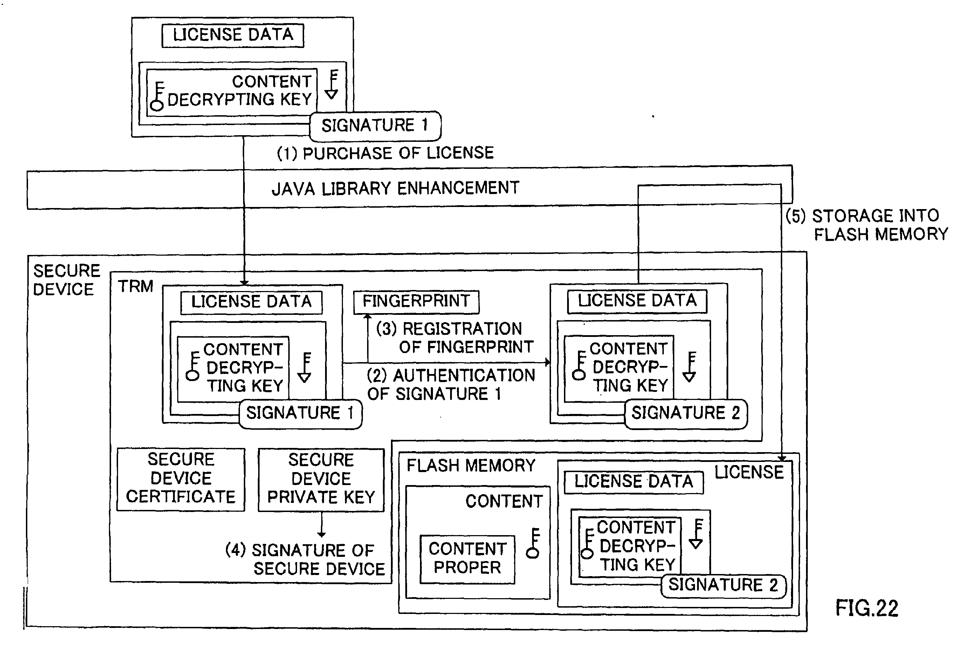

FIG. 22 is a diagram illustrating the procedures for the processing of license purchase according to this embodiment. (1) First of all, a content purchase application in a content replay apparatus downloads (purchases) a license from a content server, and transfers the license to TRM in a secure device through java library enhancement. A signature is affixed to this license by a download server (signature 1). (2) Then, authentication of signature 1 is carried out by the TRM in the secure device to render a determination on the authenticity of the signature. (3) Then, a fingerprint of the license is registered in TRM. (4) Next, using a secure device private key, TRM re-affixes a signature (signature 2). That is, signature 1 is replaced with signature 2. (5) The license after re-affixing of the signature is stored into flash memory in the secure device through the java library enhancement.

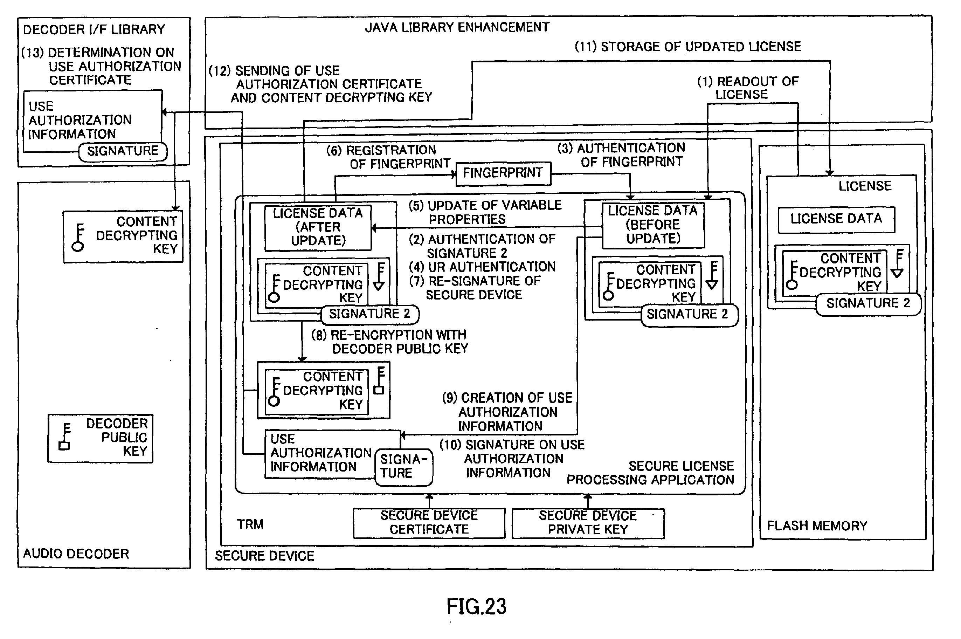

FIG. 23 is a diagram illustrating the procedures for the processing of content replay according to this embodiment. (1) First of all, the license is read out of the flash memory to TRM through the java library enhancement. (2) Then, authentication of signature 2 is carried out at TRM to render a determination on the authenticity of signature 2. (3) Next, fingerprint authentication is carried out on the license data. (4) Next, authentication is carried out on Usage Rule of the license data. (5) Next, Variable Properties of the license data is updated. (6) Next, a fingerprint is created based on the updated license data, and the created fingerprint is registered in TRM. (7) Then, a signature of the secure device is re-affixed. (8) Then, after decrypting the content decrypting key with the secure device private key, TRM re-encrypts the content decrypting key with the decoder public key. That is, key replacement is carried out. (9) Then, in a case of conformance to the condition of use indicated by the content data, use authorization information is created based on the license data. (10) Then, a signature is affixed to the use authorization information. After affixation of the signature, the use authorization information becomes a use authorization certificate. (11) Next, the license which contains the updated license data is stored in the flash memory in the secure device through the java library enhancement. (12) Then, the content decrypting key taken out of the license, with the use authorization certificate attached thereto, is sent to the decoder I/F library. (13) Next, at the decoder I/F library, the authenticity of the use authorization certificate attached to the content decrypting key is determined. Then, at the audio decoder, the content is replayed in accordance with the replay command only in a case where its authenticity is verified at the decoder I/F library. That is, at the audio decoder, the content is replayed by decrypting the content proper with the content decrypting key, which is done after decrypting of the content decrypting key itself with the decoder private key.

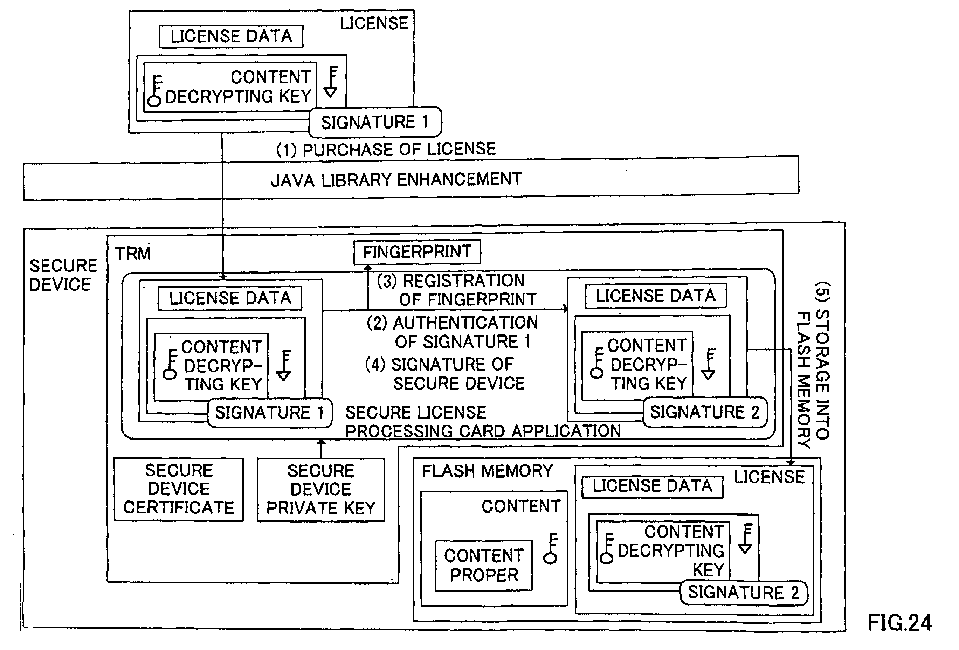

Alternatively, it is also possible to perform procedure (5) in the above license purchase processing in such a manner as illustrated in FIG. 24. That is, (5) the license after re-affixing of the signature is directly stored into the flash memory from TRM inside the secure device by bypassing the java library enhancement.

In addition, it is also possible to encrypt the content decrypting key with the secure device public key. In such a case, by sharing a single removable secure device among a plurality of terminals interchangeably, it is possible to make content limitedly replayable only with a terminal in which the secure device is inserted among the plurality of terminals. That is, it is possible to realize a license which is bound to a secure device.

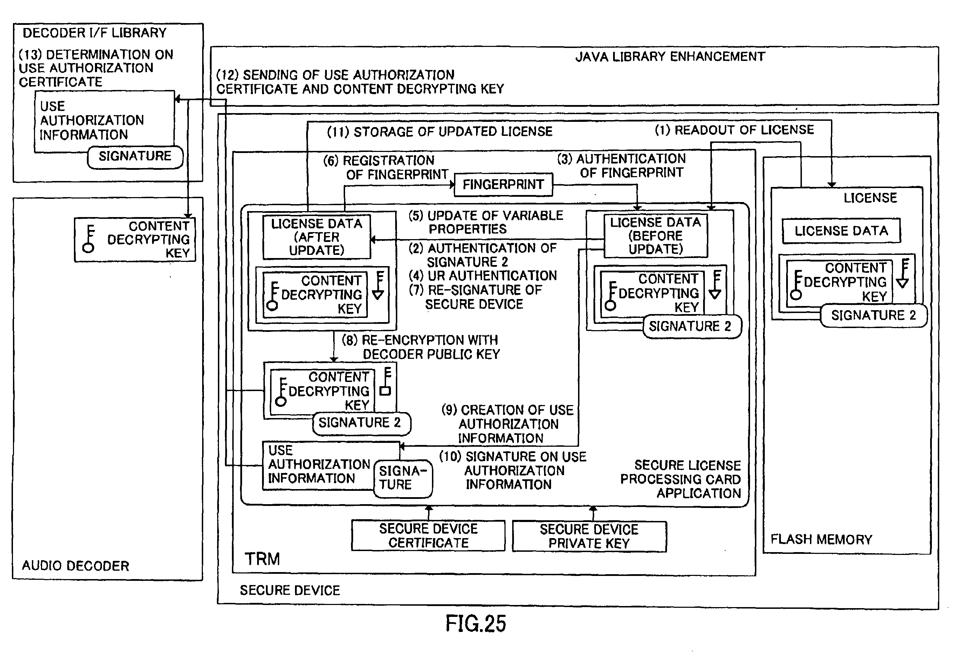

Alternatively, itisalsopossibletoperformallprocedures (1)-(12) in the above content replay processing inside TRM by bypassing the java library enhancement in such a manner as illustrated in FIG. 25.

Further alternatively, it is also possible to perform license processing by limitedly allowing a replay apparatus which has mutually authenticated with a secure device only to read out the license processing application stored in the secure device.

Further alternatively, it is also possible to perform license processing in TRM of a secure device by configuring a license processing application as an insertion card-type device application which executes the license processing inside TRM of the securedevice. Still further, it is alsopossible to download a license processing application from a content server for use as such application becomes necessary.

### (Embodiment 6)

In this embodiment, an explanation is given on a case where a content decrypting key is encrypted with a secure device public key, and the content decrypting key is further encrypted with an SIM card unique key. In this case, a license is bound to an SIM card, or more specifically, an owner-user of the SIM card, and so content replay is possible onlywhen the SIM card is inserted in a terminal.

An SIM card is an IC chip used in a cellular phone which conforms to GSM (Global System for Mobile Communication) system, the insertion of which is required for operating a GSM-format cellular phone because such a phone does not work alone. Inside an SIM card, information such as cellular phone numbers, telephone directory, and so forth is stored.

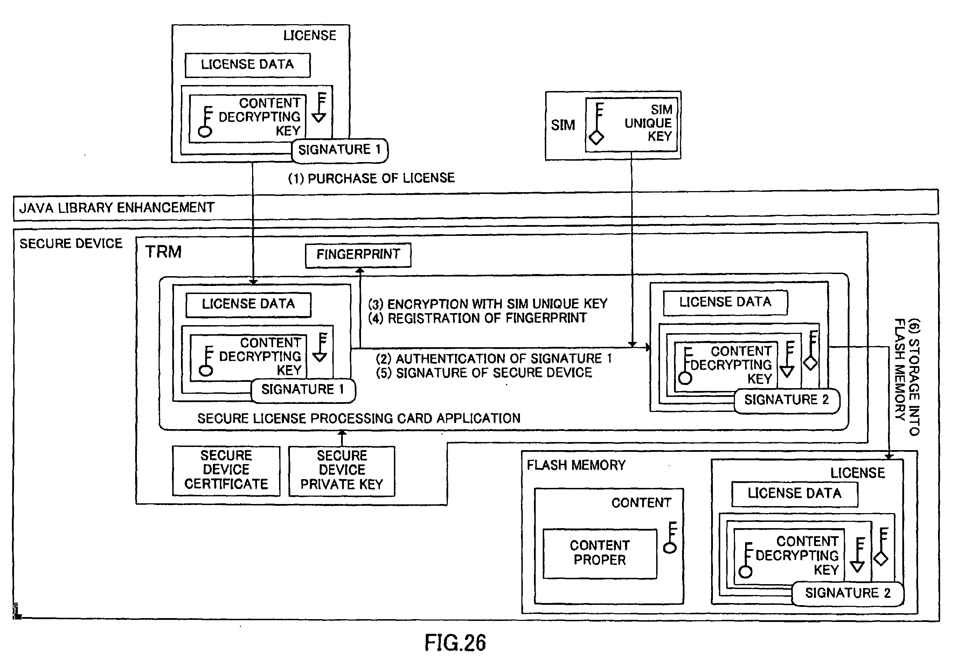

FIG. 26 is a diagram illustrating the procedures for the processing of license purchase according to this embodiment. Compared with the procedures for license purchase processing in FIG. 24, the difference in procedures described here lies in that (3) there is an additional processing of reading an SIM card unique key out of an SIM card inserted in a terminal and encrypting a content decrypting key with the SIM card unique key.

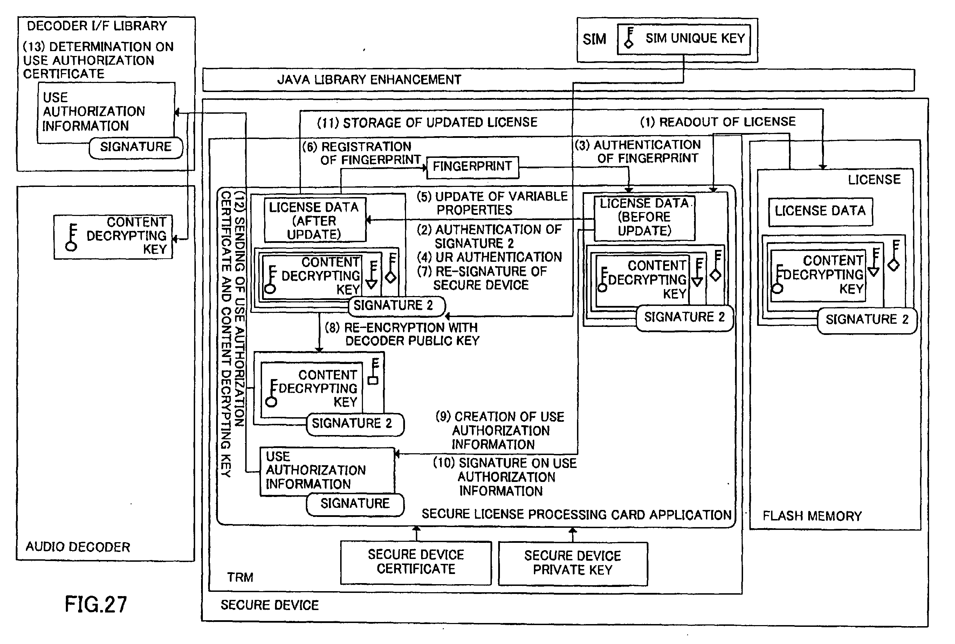

FIG. 27 is a diagram illustrating the procedures for the processing of content replay according to this embodiment. Compared with the procedures for content replay processing in FIG. 25, the difference in procedures described here lies in that (8) when performing re-encrypting with a decoder public key, an SIM card unique key is read out of an SIM card inserted in a terminal, and a content decrypting key is decrypted using the SIM card unique key, and then the content decrypting key is further decrypted with a secure device private key, and thereafter, the content decrypting key is re-encrypted with a decoder public key.

In this embodiment, it is possible to limitedly allow content to be replayed only in a case of the combined use of a specific SIM card and a specific secure device by encrypting a content decrypting key with both the SIM card unique key and the secure device public key.

Moreover, it is possible to bind a license to a specific terminal by encrypting a content decrypting key with a decoder public key as illustrated in FIG. 2 and FIG. 10, or to a specific secure device by encrypting a content decrypting key with a secure device public key as illustrated in FIG. 23 and FIG. 25, or to both a specific terminal and a specific secure device by encrypting a content decrypting key with both a decoder public key and a secure device public key as illustrated in FIG. 21. Alternatively, it is possible to bind a license to a specific group of devices or users by encrypting a content decrypting key with a shared unique key which is set for a plurality of the devices or the users.

### (Embodiment 7)

In this embodiment, an explanation is given on a case where a license is outputted (uploaded) outside from a content replay apparatus for saving a backup of a copyright. In this case, the processing of license upload and re-download is done as follows.

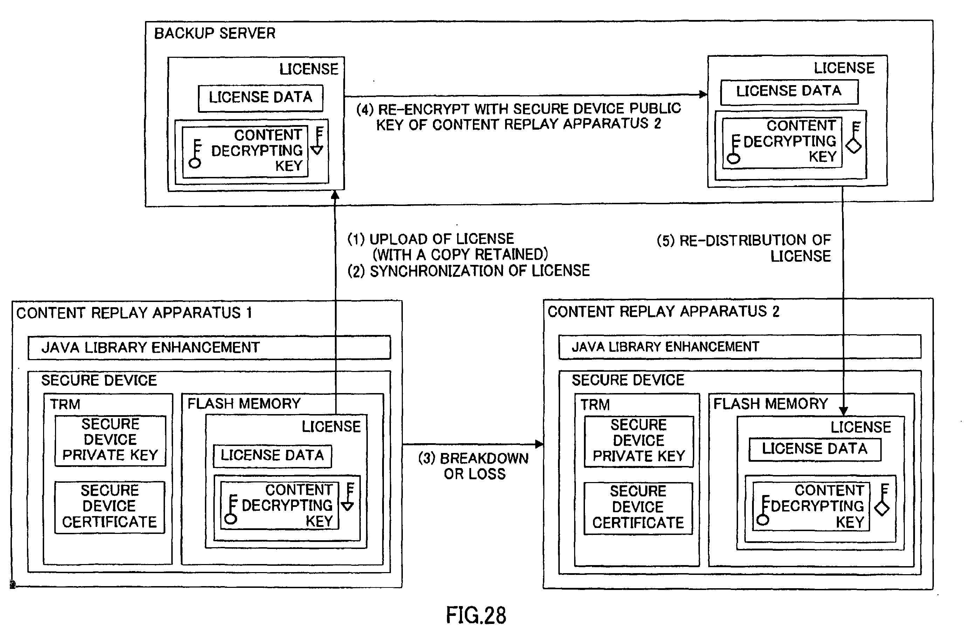

FIG. 28 is a diagram illustrating the procedures for the processing of license upload and re-download according to this embodiment. (1) First, a license on content replay apparatus 1 is copied, and the copied license is uploaded to a backup server on network. (2) When the status of the license such as the allowable number of times of replay changes as a replay is executed (the remaining number of times of replay is decremented), the status of the license on the backup server on network is synchronized with the status of the license on content replay apparatus 1. (3) Content replay apparatus 1, either together with the secure device or alone, becomes unavailable for use due to a breakdown or a loss. (4) On the backup server, the content decrypting key is re-encrypted with the public key of the secure device inserted in content replay apparatus 2, which replaces the public key of the secure device inserted in content replay apparatus 1. (5) A license is re-downloaded to content replay apparatus 2.

In this embodiment, by keeping a backup copy of a license on network server, it is possible to deal with a breakdown or a loss of a content replay apparatus, either together with a secure device or alone, and also possible to handle a license which changes its status as an execution of replay changes the allowable number of times of replay.

Alternatively, instead of uploading a copied license from a content replay apparatus, a record of the purchase of a license may be entered at a server side at the time of the purchase, which serves as a substitute for an uploaded license.

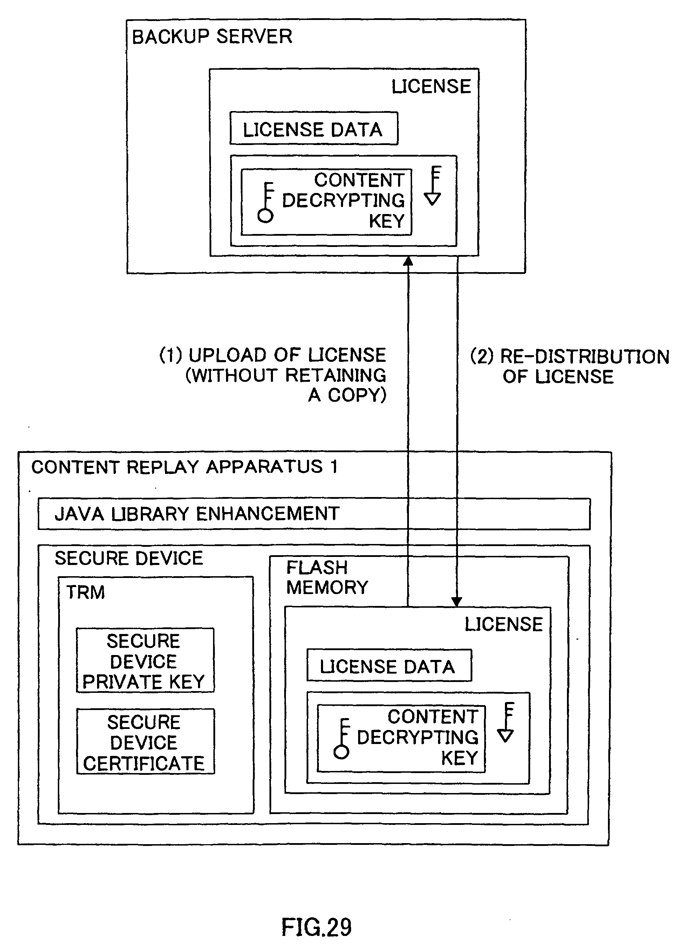

Further alternatively, as illustrated in FIG. 29, it is also possible to temporarily increase the free capacity of flash memory in a secure device by uploading a license without saving a copy of the license and by limiting a re-download destination apparatus to the upload source content replay apparatus.

As explained above, according to the present invention, it is possible to attain secure and extensible content use control in general-purpose terminals.

That is, a content replay apparatus according to the present invention comprises an acquisition section that acquires license data in which condition of use of content is described, a creation section that creates use authorization information which contains a replay command based on the license data in a case of compliance with the condition of use, a determination section that renders a determination on the authenticity of the use authorization information, and a replay section that replays the content in accordance with the replay command in a case where the use authorization information is authenticated by the determination section.

According to this configuration, replay of content is allowed only in a case where the authenticity of use authorization information is acknowledged wherein the use authorization information is created based on license data which describes condition of use for the content, it is possible to prevent eavesdropping of content data or an act of so-called impersonation of a license processing application, thereby preventing unauthorized use of the content.

In such an authentication, for example, the creation section incorporates dynamic information having a value different from others at each creation of use authorization information into the use authorization information, and the determination section renders a determination on the authenticity of the use authorization information based on the dynamic information.

According to this configuration, because the authenticity of use authorization information is determined using dynamic information which has a value different from others at each creation of use authorization information, it is possible to determine the authenticity of the use authorization information correctly, and it is also possible to prevent the unauthorized reuse of the use authorization information which has already been created once, which makes it further possible to correctly determine whether the content is allowable for use or not.

In addition, for example, the creation section creates use authorization information which further contains control information for performing replay control in compliance with condition of use, and the replay section replays content in accordance with a replay command and the control information.

According to this configuration, accurate replay control is ensured without losing the general versatility of a content replay apparatus because control information for performing replay control is incorporated in use authorization information.

In addition, for example, the creation section incorporates the-number-of-times information which indicates the number of times of content replay as control information into use authorization information, and the replay section replays the content a number of times up to the indicated number of times.

According to this configuration, in a case where the allowable number of times of replay is described as the condition of use of a license, it is possible to measure the number of times of content replay, which makes it further possible to limit the allowable number of times of replay without losing the general versatility of a content replay apparatus.

In addition, for example, the creation section incorporates the-length-of-time information which indicates the length of time for content replay as control information into use authorization information, and the replay section replays the content for a length of time up to the indicated length of time.

According to this configuration, in a case where the allowable length of time of replay is described as the condition of use of a license, it is possible to measure the accurate length of time of content replay, which makes it further possible to limit the allowable length of time of replay without losing the general versatility of a content replay apparatus.

In addition, for example, the creation section incorporates quality information which indicates the replay quality of content replay as control information into use authorization information, and the replay section replays the content in the indicated replay quality.

According to this configuration, in a case where the quality of replay is described as the condition of use of a license, it is possible to specify the replay quality of content, which makes it further possible to limit the replay quality without losing the general versatility of a content replay apparatus.

In addition, for example, the creation section incorporates a notification command for instructing the result of content replay to be notified as control information into use authorization information, and a content replay apparatus further comprises a notification section that notifies the result of the content replay in accordance with the notification command.

According to this configuration, for example, in a case where the allowable length of time of replay is described as the condition of use of a license, it is possible to measure the accurate length of time of content replay, which makes it further possible to limit the allowable length of time of replay without losing the general versatility of a content replay apparatus.

Inaddition,for example,the creationsection incorporates a notification command for instructing the progress of content replay to be notified as control information into use authorization information, and a content replay apparatus further comprises a notification section that notifies the progress of the content replay in accordance with the notification command.

According to this configuration, in a case where, for example, the allowable number of times of replay and the minimum length of time of the replay which is regarded as one execution of replay is described as the condition of use of a license, it is possible to measure content replay time, which makes it further possible to limit the allowable number of times of replay without losing the general versatility of a content replay apparatus.

Further, for example, the above content replay apparatus further has an update section that updates license data according to a notification from the notification section.

According to this configuration, in a case where, for example, the allowable length of time of replay is described as the condition of use of a license, it is possible to measure the accurate length of time of content replay, and to update the license by rewriting the allowable length of time of replay described in the condition of use of the license based on the measured time. Further in addition, in a case where, for example, the allowable number of times of replay and the minimum length of time of the replay which is regarded as one execution of replay is described as the condition of use of a license, it is possible to measure the accurate length of time of content replay, and to update the license by rewriting the allowable number of times of replay described in the condition of use of the license based on the measured time. Accordingly, it is possible to limit the number of times of replay or the length of time of replay without losing the general versatility of a content replay apparatus.

Further, for example, the above content replay apparatus further comprises a signature section that affixes a signature to use authorization information, where the determination section renders a determination on the authenticity of the signature.

According to this configuration, because a signature which is made through the use of, for example, a secure device and so forth, is attached to use authorization information, it is possible to prevent the use authorization information from being tampered.

Further, for example, the above content replay apparatus is configured to acquire a license which is bound to a unique ID (a specific device, user, storage medium, or a specific type of device, and so forth) , for example, a license which is subj ected to encrypting related to the unique ID.

According to this configuration, it is possible to limit the use of a license to a specific device (e.g. a terminal to which the license is distributed), a specific user (e.g. a user who purchased the license), or a specific type of device.

In addition, for example, the above content replay apparatus is configured to further comprise a license outputting section that outputs a license outside, and to upload/backup the license held by the content replay apparatus on a server or a PC on network.

According to this configuration, it is possible to re-download the backup license from the server or the PC on network where the backup license is uploaded in a case of a breakdown/loss of the terminal, or at the time of ordinary migration to a new model, and so forth. Moreover, it becomes possible to free up memory space temporarily.

In addition, for example, the above content replay apparatus is configured to further comprise a license synchronization section that acquires synchronization with a license outside, where in a case the content replay apparatus keeps a license both on a server on network or a PC on network and on the content replay apparatus itself, the synchronization between the license on the server on network or the PC on network and the license on the content replay apparatus itself is maintained.

According to this configuration, even in a case where the status of the license such as the allowable number of times of replay changes as a replay is executed (for example, the remaining number of times of replay is decremented) , it is still possible to back up the copyright reflecting such a changed status.

A license management apparatus according to the present invention comprises an acquisition section that acquires license data in which condition of use of content is described, a creation section that creates use authorizationinformation which contains a replay command based on the license data in a case of compliance with the condition of use, and a sending section that sends out the use authorization information.

Further, a content replay apparatus according to the present invention comprises an acquisition section that acquires use authorization information which is created based on license data in which condition of use of content is described, wherein the use authorization information contains a replay command, a determination section that renders a determination on the authenticity of the use authorization information, and a replay section that replays the content in accordance with the replay command in a case where the use authorization information is authenticated by the determination section.

According to these configurations, replay of content is allowed only in a case where the authenticity of use authorization information is acknowledged wherein the use authorization information is created based on license data which describes condition of use for the content, it is possible to prevent eavesdropping of content data or an act of so-called impersonation of a license processing application, thereby further preventing unauthorized use of the content.

A content replay control method according to the present invention comprises an acquisition step in which license data stating condition of use of content is acquired, a creation step in which use authorization information which contains a replay command is created based on the license data in a case of compliance with the condition of use, a determination step in which a determination is rendered on the authenticity of the use authorization information, and a replay step in which the content is replayed in accordance with the replay command in a case where the use authorization information is authenticated in the determination step.

According to this method, replay of content is allowed only in a case where the authenticity of use authorization information is acknowledged wherein the use authorization information is created based on license data which describes condition of use for the content, it is possible to prevent eavesdropping of content data or an act of so-called impersonation of a license processing application, thereby further preventing unauthorized use of the content.

A license management program according to the present invention comprises an acquisition step in which license data stating condition of use of content is acquired, a creation step in which use authorization information containing a replay command is created based on the license data in a case of compliance with the condition of use, and a sending step in which the use authorization information is sent out.

Further, a content replay program according to the present invention comprises an acquisition step in which use authorization information which is created based on license data stating condition of use of content, wherein the use authorization information contains a replay command, is acquired, a determination step in which a determination is rendered on the authenticity of the use authorization information, and a replay step in which the content is replayed in accordance with the replay command in a case where the use authorization information is authenticated in the determination step.

According to these programs, replay of content is allowed only in a case where the authenticity of use authorization information is acknowledged wherein the use authorization information is created based on license data which describes condition of use for the content, it is possible to prevent eavesdropping of content data or an act of so-called impersonation of a license processing application, thereby further preventing unauthorized use of the content.

This specification is based on the Japanese Patent Application No. 2002-097846 filed on March 29, 2002, entire content of which is expressly incorporated by reference herein.

### INDUSTRIAL APPLICABILITY

The present invention is applicable to a content replay apparatus and a license management apparatus in a content distribution system.

## Claims

1. A content replay apparatus comprising:
an acquisition section that acquires license data in which condition of use of content is described;
a creation section that creates use authorization information which contains a replay command based on the license data in a case of compliance with the condition of use;
a determination section that renders determination on the authenticity of the use authorization information; and
a replay section that replays the content in accordance with the replay command in a case where the use authorization information is authenticated by said determination section.

2. The content replay apparatus according to claim 1, wherein said creation section creates the use authorization information which further contains control information for performing replay control in compliance with the condition of use, and said replay section replays the content in accordance with the replay command and the control information.

3. The content replay apparatus according to claim 2, wherein said creation section incorporates a notification command for instructing the result or the progress of the content replay to be notified as the control information into the use authorization information, and said apparatus further comprises a notification section that notifies the result or the progress of content replay in accordance with the notification command.

4. The content replay apparatus according to claim 3, further comprising an updating section that updates the license data in accordance with a notification from said notification section.

5. A content replay control method comprising:
an acquisition step of acquiring license data describing condition of use of content;
a creation step of creating use authorization information which contains a replay command based on the license data in a case of compliance with the condition of use;
a determination step of rendering determination on the authenticity of the use authorization information; and
a replay step of replaying the content in accordance with the replay command in a case where the use authorization information is authenticated in said determination step.
